(19) Europäisches Patentamt
European Patent Office
Office européen des brevets

(11) **EP 2 445 968 B1**

(12) **EUROPÄISCHE PATENTSCHRIFT**

(45) Veröffentlichungstag und Bekanntmachung des Hinweises auf die Patenterteilung:
**21.08.2013 Patentblatt 2013/34**

(21) Anmeldenummer: **10725766.9**

(22) Anmeldetag: **22.06.2010**

(51) Int Cl.:
*C08L 75/06* (2006.01)   *C08K 5/29* (2006.01)
*C08L 75/04* (2006.01)

(86) Internationale Anmeldenummer:
**PCT/EP2010/058763**

(87) Internationale Veröffentlichungsnummer:
**WO 2010/149636 (29.12.2010 Gazette 2010/52)**

(54) **POLYURETHAN AUF DER BASIS WEICHEN THERMOPLASTISCHEN POLYURETHANS**

POLYURETHANE ON THE BASIS OF SOFT THERMOPLASTIC POLYURETHANE

POLYURÉTHANE À BASE DE POLYURÉTHANE THERMOPLASTIQUE SOUPLE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.06.2009 EP 09163511**

(43) Veröffentlichungstag der Anmeldung:
**02.05.2012 Patentblatt 2012/18**

(73) Patentinhaber: **BASF SE**
**67056 Ludwigshafen (DE)**

(72) Erfinder:
• BOUDOU, Marine
  68161 Mannheim (DE)
• PRISSOK, Frank
  49448 Lemförde (DE)
• HENZE, Oliver Steffen
  49448 Lemförde (DE)
• BERTELS, Alfons
  49356 Diepholz (DE)

(56) Entgegenhaltungen:
WO-A1-03/050187     WO-A1-2006/134138
WO-A1-2008/116801   GB-A- 2 441 205

**Beschreibung**

Die Erfindung betrifft ein Polyurethan auf Basis eines thermoplastischen Polyurethans und eines zugesetzten Polyisocyanates, ein Verfahren zur Herstellung der erfindungsgemäßen Polyurethane sowie ihre Verwendung.

Die Herstellung von thermoplastischen Polyurethanen, die im Folgenden auch als TPU abgekürzt werden, ist allgemein bekannt. TPU sind teilkristalline Werkstoffe und gehören zu der Klasse der thermoplastischen Elastomere. Charakteristisch für Polyurethan-Elastomere ist der segmentierte Aufbau der Makromoleküle. Aufgrund der unterschiedlichen Kohäsionsenergiedichten dieser Segmente erfolgt im idealen Fall eine Phasentrennung in kristalline "harte" und amorphe "weiche" Bereiche. Die resultierende Zweiphasenstruktur bestimmt das Eigenschaftsprofil von TPU. Thermoplastische Polyurethane sind Kunststoffe mit einem vielfältigen Anwendungsgebiet. So finden sich TPU beispielsweise in der Automobilindustrie, z.B. in Instrumententafelhäuten, in Folien, in Kabelummantelungen, in der Freizeit-Industrie, als Absatzflecke, als Funktions- und Designelement bei Sportschuhen, als Weichkomponente in Hart -Weichkombinationen und in vielfältigen weiteren Anwendungen.

Zur Verbesserung des Eigenschaftsprofils von TPU ist es aus der Literatur bekannt, Vernetzungen in das TPU einzuführen, die dazu führen, dass die Festigkeiten erhöht, die Wärmestandfestigkeit verbessert, Zug- und Druckverformungsrest verringert, Beständigkeiten gegen Medien aller Art, Rückstellvermögen und Kriechverhalten verbessert werden.

Als Verfahren zur Vernetzung sind unter anderem UV- oder Elektronenstrahlvernetzung, Vernetzung über Siloxangruppen und die Ausbildung von Vernetzungen durch Zugabe von Isocyanaten zum geschmolzenen TPU bekannt. Die Umsetzung eines TPU, bevorzugt in geschmolzenem Zustand, mit Isocyanatgruppen aufweisenden Verbindungen wird auch als Prepolymervernetzung bezeichnet und ist allgemein aus beispielsweise der WO 2005/054322 A2 und WO 2006/134138 A1 bekannt. Die Modifizierung der in den thermoplastischen Polyurethanen enthaltenen Hart- und Weichphasen ist bereits bekannt aus der WO 03/014179 A1 und der WO 01/12692 A1.

Nachteilig an den bekannten thermoplastischen Polyurethanen sind für spezielle Anwendungen ihre mechanischen Eigenschaften, insbesondere im Hinblick auf den Druckverformungsrest und den Biegewinkel.

Aufgabe der vorliegenden Erfindung war es, Polyurethane zur Verfügung zu stellen, die über verbesserte mechanische Eigenschaften verfügen. Insbesondere sollten Druckverformungsrest und Biegewinkel verbessert werden.

Die vorliegende Erfindung betrifft Polyurethane PU-E auf Basis eines thermoplastischen Polyurethans PU-1 und eines dem thermoplastischen Polyurethan PU-1, bevorzugt unter Reaktion zugegebenen Isocyanates IC-1, das bevorzugt ein Isocyanatkonzentrat ist, mit einer Funktionalität größer als 2, dadurch gekennzeichnet, dass PU-1 einen Hartphasenanteil von 0 % bis 5 %, insbesondere von 2 % bis 4 %, aufweist und das Isocyanat, IC-1, das bevorzugt ein Isocyanatkonzentrat ist, zu mindestens 2 Gew.-% bis 20 Gew.%, besonders bevorzugt 3 Gew.-% bis 15 Gew.-%, insbesondere zu mindestens 3 Gew.-% bis 10 Gew %, bezogen auf das Polyurethan PU-1 zugegeben wird.

In einer bevorzugten Ausführungsform enthält das Isocyanatkonzentrat IC-1 20 Gew.-% bis 70 Gew.-%, bevorzugt 25 Gew.-% bis 70 Gew.-%, weiter bevorzugt 30 Gew.-% bis 60 Gew.-%, ganz besonders bevorzugt 35 Gew.-% bis 60 Gew.-% Isocyanat, das in einem Thermoplasten gelöst ist. Weiter bevorzugt ist das Isocyanat des Isocyantkonzentrats IC-1 gelöst in dem thermoplastischen Polyurethan PU-2. Die Gew.-% sind bezogen auf das Gesamtgewicht des Thermoplasten, bevorzugt des thermoplastischen Polyurethans PU-2, enthaltend das Isocyanat. Dabei heißt, dass das Isocyanat im Isocyanatkonzentrat gelöst vorliegt, dass das Isocyanat praktisch nicht mit dem Thermoplasten der bevorzugt thermoplastisches Polyurethan PU-2 ist, reagiert hat. Nicht reagiert heißt, dass in dem Isocyanatkonzentrat IC-1 zumindest 60 %, bevorzugt zumindest 80 %, weiter bevorzugt zumindest 90 %, noch weiter bevorzugt zumindest 95 % und ganz besonders bevorzugt zumindest 99 % des Isocyanats nicht mit dem Thermoplasten reagiert haben. Bestimmt wird dieser %-Gehalt, indem man den auf Basis, des zugesetzten Isocyanates theoretischen Gehalt an Isocyanatgruppen ermittelt (theoretischer NCO-Gehalt), der 100 % gesetzt wird. Anschließend wird der in dem Isocyanatkonzentrat tatsächlich enthaltene Gehalt an freien Isocyanatgruppen (tatsächlicher NCO-Gehalt) ermittelt und prozentual auf den theoretischen NCO-Gehalt bezogen. Eine bevorzugte Bestimmungsmethode für den tatsächlichen NCO-Gehalt wird in Beispiel 7 wiedergegeben.

Das Isocyanatkonzentrat IC-1 weist besonders bevorzugt einen NCO-Gehalt größer als 5 % und weniger als 70 %, besonders bevorzugt von größer 8 % und weniger als 40 % auf.

Als Isocyanate in dem erfindungsgemäßen Isocyanatkonzentrat IC-1 können allgemein bekannte Isocyanate verwendet werden, beispielsweise aliphatische, cycloaliphatische und/oder aromatische Isocyanate, bevorzugt mit 2 bis 10 Isocyanatgruppen, besonders bevorzugt sind 2 bis 5 Isocyanatgruppen und insbesondere bevorzugt sind 3 Isocyanatgruppen.

Ebenfalls bevorzugt liegen die Isocyanate in Form von Isocyanuraten vor, die bevorzugt zwei bis acht, weiter bevorzugt 2 bis 5 und besonders bevorzugt drei Isocyanatgruppen aufweisen. In einer anderen bevorzugten Ausführungsform liegen die Isocyanate in Form von Prepolymeren mit 2 bis 10 Isocyanatgruppen vor. Prepolymere heißt, dass Isocyanate mit gegenüber Isocyanaten reaktiven Verbindungen, bevorzugt Alkoholen, umgesetzt werden und danach 2 bis 10 Isocyanatgruppen aufweisen.

In einer weiteren bevorzugten Ausführungsform liegen mindestens 2 der bevorzugten Ausführungsformen des Isocyanatkonzentrats, also Isocyanate und Isocyanaurate, Isocyanate und Prepolymere oder Prepolymere und Isocyanaurate nebeneinander vor. In einer bevorzugten Ausführungsform liegen Isocyanate, Prepolymere und Isocyanaurate nebeneinander vor.

Besonders bevorzugt sind als Isocyanate für die Herstellung des Isocyanatkonzentrats IC-1 2,2'-, 2,4'- und/oder 4,4'-Diphenylmethandiisocyanat (MDI), ein Carbodiimid-modifiziertes 2,2'-, 2,4'- und/oder 4,4'- Diphenylmethandiisocyanat (MDI), ein Prepolymer auf der Basis von 2,2'-, 2,4'- und/oder 4,4'- Diphenylmethandiisocyanat (MDI), bevorzugt ein Prepolymer mit einem NCO Gehalt von 20 bis 25% und einer Viskosität bei 25 °C von 500 bis 1000 mPas bestimmt nach DIN 53018, Biuret und/oder Isocyanuratgruppen aufweisende Isocyanate, besonders bevorzugt Isocyanurat mit einem NCO-Gehalt von 20 bis 25% und einer Viskosität bei 23 °C von 2,5 bis 4 Pas bestimmt nach DIN EN ISO 3219, insbesondere auf der Basis von Hexamethylendiisocyanat (HDI).

In einer bevorzugten Ausführungsform sind mindestens zwei Isocyanate in dem Isocyanatkonzentrat IC-1 enthalten. Die Funktionalität im Isocyanatkonzentrat IC-1 liegt dann bevorzugt zwischen 2 und 8, weiter bevorzugt zwischen 2 und 6 und besonders bevorzugt zwischen 2,5 und 4.

Die Funktionalität gibt die durchschnittliche Anzahl an Isocyanatgruppen (NCO-Gruppen) je Molekül Isocyanat an.

Insbesondere bevorzugt sind Carbodiimid-modifiziertes 4,4'-Diphenyl-methandiisocyanat (MDI), besonders bevorzugt mit einem Isocyanatgehalt von 25 bis 33 Gew.-%, insbesondere von 29,5 Gew.-%, beispielsweise Lupranat® MM 103 (BASF Aktiengesellschaft), Prepolymer auf Basis Ethylenoxid/Propylenoxid, bevorzugt mit einem Molekulargewicht zwischen 0,4 und 0,6 kg/mol, insbesondere mit einem Molekulargewicht von 0,45 kg/mol, bevorzugt mit einem Isocyanatgehalt von 20 bis 28 Gew.-%, insbesondere 23 Gew.-%, beispielsweise Lupranat® MP 102 (BASF Aktiengesellschaft), und/oder ein trimerisiertes Hexamethylendiisocyanat bevorzugt mit einem Isocyanatgehalt von 20 bis 28 Gew.-%, insbesondere 23 Gew.-%, beispielsweise Basonat® HI 100 (BASF Aktiengesellschaft).

Die Herstellung des Isocyanatkonzentrats IC-1, basierend auf einem Thermoplasten, bevorzugt einem thermoplastischen Polyurethan PU-2, kann nach allen dem Fachmann bekannten Verfahren erfolgen. Beispielsweise kann man thermoplastisches Polyurethan schmelzen und anschließend das Isocyanat, bevorzugt homogen, in die thermoplastische Polyurethanschmelze einarbeitet. Bevorzugt soll die resultierende thermoplastische Polyurethanschmelze eine Temperatur von 120 °C bis 160 °C aufweisen. Besonders bevorzugt wird man das für das Isocyanatkonzentrat verwendete thermoplastische Polyurethan PU-2 bei einer Temperatur von 170 °C bis 280 °, bevorzugt von 170 °C bis 240 °C schmelzen und anschließend in diese Schmelze das Isocyanat mit Temperaturen von 20 °C bis 80 °C zumischen, so dass die resultierende Mischung, das Isocyanatkonzentrat IC-1, eine Temperatur kleiner 160 °C, bevorzugt von 120 °C bis 160 °C aufweist. Eine derartige Verarbeitung bei einer Zieltemperatur kleiner 160 °C bietet den Vorteil, dass bei dieser Temperatur ein Abbau des thermoplastischen Polyurethans durch die Zugabe von Diisocyanaten oder eine Vernetzung des thermoplastischen Polyurethans durch die Zuführung von Tri- oder Polyisocyanaten vermieden werden kann.

Bevorzugt wird das Isocyanat mittels eines Extruders in das thermoplastische Polyurethan eingearbeitet, bevorzugt mittels eines Zweiwellen-Extruders. Bevorzugt kann man das aus dem Extruder erhältliche Produkt, entsprechend Isocyanatkonzentrat IC-1, d. h. das thermoplastische Polyurethan enthaltend Isocyanat, direkt nach dem Austreten aus der Düse des Extruders in einem Wasserbad abkühlen und den erhaltenen Strang anschließend beispielsweise durch allgemein bekannte Verfahren granulieren.

In einer bevorzugten Ausführungsform wird das aus dem Extruder tretende Isocyanatkonzentrat IC1, durch eine Mehrlochdüse direkt vom Extruder aus in ein Wasserbad ausgepresst und anschließend mit einem rotierenden Messer zerteilen, wodurch kleine Granulatkörner entstehen. Diesen Vorgang bezeichnet man auch als Unterwassergranulierung.

Der Hartphasenanteil wird berechnet gemäß

$$HP\,(\%) = \frac{(n_{KV} \times M_{ISO}) + m_{KV}}{m_{\text{gesamt}}} \times 100$$

FORMEL 1

worin bedeuten

| | |
|---|---|
| $HP$ (%): | Hartphasenanteil in Prozent |
| $n_{KV}$: | Molanteil an Kettenverlängerer |
| $M_{ISO}$: | zahlenmittleres Molekulargewicht von Isocyanat in Gramm per Mole |
| $m_{KV}$: | Gewicht in Gramm von Kettenverlängerer |
| $m_{\text{gesamt}}$: | Gesamtgewicht in Gramm von Kettenverlängerer, Isocyanat und Polyol |

In einer besonders bevorzugten Ausführungsform hat das thermoplastische Polyurethan PU-E eine Kennzahl von 1100 bis 1600.

Die Kennzahl ist definiert durch das molare Verhältnis der insgesamt bei der Umsetzung eingesetzten Isocyanatgruppen der Komponente (a) zu den gegenüber Isocyanaten reaktiven Gruppen, d. h. den aktiven Wasserstoffen, der Komponenten (b) und gegebenenfalls Kettenverlängerer (c). Gegebenenfalls heißt hier, dass der Kettenverlängerer immer dann berücksichtigt wird, wenn er zugegeben ist. Bei einer Kennzahl von 1000 kommt auf eine Isocyanatgruppe der Komponente (a) ein aktives Wasserstoffatom, d. h. eine gegenüber Isocyanaten reaktive Funktion, der Komponenten (b) und (c). Bei Kennzahlen über 1000 liegen mehr Isocyanatgruppen als Gruppen mit aktiven Wasserstoffatomen, z. B. OH-Gruppen, vor.

Erfindungsgemäß zu verwendende Komponenten:

Soweit nicht anders angegeben ist, beziehen sich die folgenden Angaben zu den Polyurethanen und den zu ihrer Bildung verwendeten Komponenten sowohl auf die Polyurethane PU-E als auch auf die thermoplastischen Polyurethane PU-1 und PU-2.

Verfahren zur Herstellung von Polyurethanen sind allgemein bekannt. Bevorzugt werden die Polyurethane durch Umsetzung von (a) Isocyanaten mit (b) gegenüber Isocyanaten reaktiven Verbindungen mit einem zahlenmittleren Molekulargewicht von 0,5 kg/mol bis 12 kg/mol und bevorzugt mit (c) Kettenverlängerungsmitteln mit einem zahlenmittleren Molekulargewicht von 0,05 kg/mol bis 0,499 kg/mol, gegebenenfalls in Gegenwart von (d) Katalysatoren und/oder (e) üblichen Hilfsstoffen hergestellt.

Im Folgenden sollen beispielhaft bevorzugte Ausgangskomponenten und Verfahren zur Herstellung bevorzugter Polyurethane dargestellt werden. Die bei der Herstellung dieser Polyurethane beispielhaft bevorzugten Komponenten von (a) Isocyanaten, (b) gegenüber Isocyanaten reaktive Verbindungen, (c) Kettenverlängerungsmittel sowie gegebenenfalls (d) Katalysatoren und/oder (e) übliche Hilfsstoffe sollen im Folgenden beschrieben werden. Die Isocyanate (a), die gegenüber Isocyanat reaktiven Verbindungen (b) und, sofern verwendet, auch die Kettenverlängerer (c) werden auch als Aufbaukomponenten angesprochen.

a) Als organische Isocyanate (a) können allgemein bekannte Isocyanate eingesetzt werden, bevorzugt sind aromatische, aliphatische, cycloaliphatische und/oder araliphatische Isocyanate, weiter bevorzugt Diisocyanate, bevorzugt 2,2'-, 2,4'- und/oder 4,4'-Diphenyl-methandiisocyanat (MDI), 1,5-Naphthylendiisocyanat (NDI), 2,4- und/oder 2,6-Toluylendiisocyanat (TDI), 3,3'-Dimethyl-diphenyldiisocyanat, 1,2-Diphenyl-ethandiisocyanat und/oder Phenylendiisocyanat, Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis (isocyanatomethyl)cyclo-hexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat (H12MDI). Weiter bevorzugt 2,2'-, 2,4'-und/oder 4,4'-Diphenylmethandiiso-cyanat (MDI), 1,5-Naphthylendiisocyanat (NDI), 2,4- und/oder 2,6-Toluylendiiso-cyanat (TDI), Hexamethylendiisocyanat (HDI), 4,4'-, 2,4'- und 2,2'-Dicyclohexyl-methan-diisocyanat (H12MDI) und/oder 1-Isocyanato-3,3,5-trimethyl-5-isocyanatomethyl-cyclohexan IPDI, insbesondere bevorzugt 4,4'- MDI. In einer bevorzugten Ausführungsform wird nur ein Isocyanat zur Herstellung eines Polyurethans verwendet, in einer anderen bevorzugten Ausführungsform werden wenigstens 2 verschiedene Isocyanate für die Herstellung des Polyurethans verwendet.

b) Als gegenüber Isocyanaten reaktive Verbindungen (b) können allgemein bekannten gegenüber Isocyanaten reaktiven Verbindungen eingesetzt werden, bevorzugt sind Polyesterole, Polyetherole und/oder Polycarbonatdiole, die auch unter dem Begriff "Polyole" zusammengefasst werden, mit zahlenmittleren Molekulargewichten von 0,5 kg/mol bis 12 kg/mol, bevorzugt 0,6 kg/mol bis 6 kg/mol, insbesondere 0,8 kg/mol bis 4 kg/mol, und bevorzugt einer mittleren Funktionalität von 1,8 bis 2,3, bevorzugt 1,9 bis 2,2, insbesondere 2. Die mittlere Funktionalität gibt hier die Anzahl an Gruppen in einer Mischung an, die durchschnittlich pro Molekül vorliegen und mit der Isocyanat-Gruppe reagieren. Diese Polyole bilden die Weichphasen-Komponente.

c) Als Kettenverlängerungsmittel (c) können allgemein bekannte aliphatische, araliphatische, aromatische und/oder cycloaliphatische Verbindungen bevorzugt mit einem zahlenmittleren Molekulargewicht von 0,05 kg/mol bis 0,499 kg/mol, bevorzugt 2-funktionelle Verbindungen, d.h. solche Moleküle mit zwei gegenüber Isocyanatgruppen reaktive Gruppen, eingesetzt werden. Bevorzugt sind Diamine und/oder Alkandiole mit 2 bis 10 C-Atomen im Alkylenrest, insbesondere Butan-diol-1,4, Hexandiol-1,6, Propandiol-1,3, Ethylenglykol-1,2 und/oder Di-, Tri-, Tetra-, Penta-, Hexa-, Hepta-, Okta-, Nona- und/oder Dekaalkylenglykole mit bis 8 Kohlenstoffatomen, bevorzugt entsprechende Oligo- und/oder Polypropylenglykole, wobei in einer bevorzugten Ausführungsform auch Mischungen der Kettenverlängerer eingesetzt werden. Die Kettenverlängerer (c) bilden mit den Isocyanaten (a) die Hartphasen-Komponente.

d) Geeignete Katalysatoren (d), welche insbesondere die Reaktion zwischen den NCO-Gruppen der Isocyanate (a), bevorzugt der Diisocyanate und den Hydroxylgruppen der Aufbaukomponenten (b) und (c) beschleunigen, sind die nach dem Stand der Technik bekannten und üblichen tertiären Amine, bevorzugt sind Triethylamin, Dimethylcyclohexyl-amin, N-Methylmorpholin, N,N'-Dimethylpiperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, bevorzugt Eisen-(III)- acetylacetonat, Zinnverbindungen, bevorzugt Zinndiacetat, Zinndioctoat, Zinndilaurat oder die Zinndialkylsalze, aliphatischer Carbonsäuren, bevorzugt Dibutylzinndiacetat, Dibutylzinndilaurat oder ähnliche. Die Katalysatoren werden üblicherweise in Mengen von 0,00001 bis 0,1 Gew.-Teilen pro 100 Gew.-Teile Polyhydroxylverbindung (b) eingesetzt.

e) Neben Katalysatoren (d) werden in bevorzugten Ausführungsformen den Aufbaukomponenten (a) bis (c) auch übliche Hilfsmittel (e) hinzugefügt. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher.

Als Hydrolyseschutzmittel werden bevorzugt oligomere und/oder polymere a-liphatische oder aromatische Carbodiimide verwendet. Um die erfindungsgemäßen TPU gegen Alterung zu stabilisieren, werden dem TPU bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, "Hindered Amine Light Stabilizer", UV-Absorber, Hydrolyseschutzmittel, Quen-cher und Flammschutzmittel. Beispiele für kommerzielle Hydrolyseschutzmittel und Stabilisatoren sind beispielsweise dem Plastics Additive Handbook, 5th Edition, H. Zweifel, ed., Hanser Publishers, München, 2001 ([1]), S. 98 - S. 136. Ist das erfindungsgemäße TPU während seiner Anwendung thermoxidativer Schädigung ausgesetzt, können Antioxidantien zugegeben werden. Bevorzugt werden phenolische Antioxidantien verwendet.

Beispiele für phenolische Antioxidantien sind gegeben in Plastics Additive Handbook, 5th edition, H. Zweifel, ed, Hanser Publishers, München, 2001, S. 98 - 107 und S. 116 - 121. Bevorzugt sind solche phenolische Antioxidantien, deren zahlenmittleres Molekulargewicht größer als 0,7 kg/mol sind. Ein Beispiel für ein bevorzugt verwendetes phenolisches Antioxidans ist Pentaerythrityl-tetrakis (3-(3,5-bis(1,1-dimethylethyl)-4-hydroxyphenyl) propionate) (Irganox® 1010). Die phenolischen Antioxidantien werden im allgemeinen in Konzentrationen zwischen 0,1 und 5 Gew.-% eingesetzt, bevorzugt zwischen 0,1 und 2 Gew.-%, insbesondere zwischen 0,5 und 1,5 Gew.-%, jeweils bezogen auf das Gesamtgewicht des TPU.

Bevorzugt werden die TPU zusätzlich mit einem UV-Absorber stabilisiert. UV-Absorber sind Moleküle, die energiereiches UV-Licht absorbieren und die Energie dissipieren. Gängige UV-Absorber, welche in der Technik Verwendung finden, gehören z. B. zur Gruppe der Zimtsäureester, der Diphenylcyanacrylate, der Formamidine, der Benzylidenemalonate, der Diarylbutadiene, Triazine sowie der Benzotriazole. Beispiele für kommerzielle UV-Absorber finden sich in Plastics Additive Handbook, 5th edition, H. Zweifel, ed, Hanser Publishers, München, 2001, Seite 116 - 122. In einer bevorzugten Ausführungsform weisen die UV-Absorber ein zahlenmittleres Molekulargewicht von größer als 0,3 kg/mol, insbesondere größer als 0,39 kg/mol, auf. Ferner sollten die bevorzugt verwendeten UV-Absorber ein zahlenmittleres Molekulargewicht von nicht größer als 5 kg/mol, besonders bevorzugt von nicht größer als 2 kg/mol aufweisen. Besonders geeignet als UV-Absorber ist die Gruppe der Benzotriazole. Beispiele für besonders geeignete Benzotriazole sind Tinuvin® 213, Tinuvin® 328, Tinuvin® 571, sowie Tinuvin® 384 und das Eversorb® 82. Bevorzugt werden die UV-Absorber in Mengen zwischen 0,01 und 5 Gew.-%, bezogen auf die Gesamtmasse TPU zudosiert, besonders bevorzugt zwischen 0,1 und 2,0 Gew.-%, insbesondere zwischen 0,2 und 0,5 Gew.-%, jeweils bezogen auf das Gesamtgewicht des TPU. Oft ist eine oben beschriebene UV-Stabilisierung basierend auf einem Antioxidants und einem UV-Absorber noch nicht ausreichend, um eine gute Stabilität des erfindungsgemäßen TPU gegen den schädlichen Einfluss von UV-Strahlen zu gewährleisten. In diesem Falle kann zu der Komponente (e) bevorzugt zusätzlich zu dem Antioxidants und dem UV-Absorber, noch ein Hindered-Amine Light Stabilizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere. HALS-Verbindungen sind allgemein bekannt und kommerziell erhältlich. Beispiele für kommerziell erhältliche Hals-Stabilisatoren finden sich in Plastics Additive Handbook, 5th edition, H. Zweifel, Hanser Publishers, München, 2001, S. 123 - 136. Als "Hindered Amine Light Stabilizer" werden bevorzugt Hindered Amine Light Stabilizer genommen, bei denen das zahlenmittlere Molekulargewicht größer als 0,5 kg/mol sind. Ferner sollte das zahlenmittlere Molekulargewicht der bevorzugten HALS-Verbindungen bevorzugt nicht größer als 10 kg/mol, besonders bevorzugt nicht größer als 5 kg/mol sein. Besonders bevorzugte Hindered Amine Light Stabilizer sind bis-(1,2,2,6,6-pentamethyl-piperidyl) sebacat (Tinuvin® 765, Ciba Spezialitätenchemie AG) und, das Kondensationsprodukt aus 1-hydroxyethyl-2,2,6,6-tetramethyl-4-hydroxypiperidine and succinic acid (Tinuvin® 622). Insbesondere bevorzugt ist das Kondensationsprodukt aus 1-hydroxyethyl-2,2,6,6-tetramethyl-4-hydroxypiperidine and succinic acid (Tinuvin® 622), wenn der Titangehalt des Produktes < 150 ppm, bevorzugt < 50 ppm insbesondere bevorzugt < 10 ppm ist. HALS Verbindungen werden bevorzugt in einer Konzentration zwischen 0,01 und 5 Gew.-% eingesetzt, besonders bevorzugt zwischen 0,1 und 1 Gew.-%, insbesondere zwischen 0,15 und 0,3 Gew.-%, jeweils bezogen auf das Gesamtgewicht des TPU. Eine besonders bevorzugte UV Stabilisierung enthält eine Mischung aus einem phenolischen Stabilisator, einem Benzotriazol und einer HALS-Verbindung in den oben beschriebenen bevorzugten Mengen.

Nähere Angaben über die oben genannten Hilfsmittel- und Zusatzstoffe sind der Fachliteratur zu entnehmen, z. B. aus Plastics Additive Handbook, 5th edition, H. Zweifel, ed, Hanser Publishers, München, 2001. Alle in dieser Schrift genannten Molekulargewichte sind zahlenmittlere Molekulargewichte und weisen, sofern nichts anderes angegeben ist, die Einheit [kg/mol] auf.

Zur Einstellung der Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 0 bis 1 : 0,35 wobei die Härte der TPU mit zunehmendem Gehalt an (c) ansteigt.

Die Herstellung der TPU kann nach den bekannten Verfahren kontinuierlich, bevorzugt mit Reaktionsextrudern oder dem Bandverfahren nach one-shot oder dem Prepolymerverfahren, oder diskontinuierlich erfolgen. Bevorzugt ist ebenfalls die Herstellung über das Prepolymerverfahren. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (c), sowie die Komponenten (d) und/oder (e) einzeln oder als Gemisch in den Extruder eingeführt, und bevorzugt bei Temperaturen von 100 °C bis 280 °C, weiter bevorzugt bei 140 °C bis 250 °C zur Reaktion gebracht. Das erhaltene TPU wird extrudiert, abgekühlt und granuliert.

Aufgrund ihrer besonders guten Verträglichkeit sind TPU gemäß der WO 03/014179 A1, sowohl zur Herstellung von PU-E als auch PU-1 bevorzugt geeignet. Diese Schriften sind durch Referenz Bestandteil dieser Anmeldung. Die nachfolgenden Ausführungen bis zu den Beispielen beziehen sich auf diese besonders bevorzugten TPU.

Besonders bevorzugte Polyurethane basieren auf:

- monomerem, polymerem, also mindestens zwei Kerne umfassend und/oder Uretonimin, das ein Reaktionsprodukt aus Carbodiimid und Isocyanat ist, enthaltendem MDI als Isocyanat und
- einer Polyolkomponente für die Weichphase mit einem zahlenmittleren Molekulargewicht von mehr als 0,5 kg/mol und kleiner als 100 kg/mol, bevorzugt 0,6 kg/mol bis 6 kg/mol, insbesondere 0,8 kg/mol bis 4 kg/mol.
- einer Polyolkomponente für die Hartphase mit einem zahlenmittleren Molekulargewicht von mehr als 0 kg/mol und maximal 0,499 kg/mol, insbesondere von 0,060 kg/mol bis 0,15 kg/mol.

In einer besonders bevorzugten Ausführungsform basiert das thermoplastische Polyurethan PU-1 auf einem MDI als Polyisocyanat und einem Polyesterol und/oder Polyetherol, insbesondere einem Polyester der Adipinsäure mit Butandiol und/oder Ethylenglycol und/oder Methylpropandiol.

Die erfindungsgemäßen Polyurethane PU-E sind in bevorzugten Ausführungsformen dadurch gekennzeichnet, dass zumindest eine der folgenden Eigenschaften erfüllt ist:

- Die Zugfestigkeit ist größer als 5 MPa, bevorzugt größer 10 MPa und besonders bevorzugt größer als 20 MPa.
- Die Reißdehnung ist größer als 200 %, bevorzugt größer als 300 % und besonders bevorzugt größer als 500 %.
- Der Weiterreißwiderstand ist größer 10 kN/m, bevorzugt größer als 15 KN/m und besonders bevorzugt größer oder gleich 25 kN/m.
- Der Abrieb ist kleiner als 100 mm$^3$, bevorzugt kleiner als 70 mm$^3$ und besonders bevorzugt kleiner als 55 mm$^3$.
- Der Druckverformungsrest ist kleiner ist als 40 % bei 23 °C, bevorzugt kleiner als 30 % und besonders bevorzugt kleiner als 24 % .
- Der Druckverformungsrest bei 70 ° C ist kleiner als 50 %, bevorzugt kleiner als 35 % und besonders bevorzugt kleiner als 25 %.
- Der Biegewinkel bei 23 °C kleiner ist als 50 %, bevorzugt kleiner als 30 % und besonders bevorzugt kleiner als 20 %. Bestimmt werden die genannten Parametern mit den in den Beispielen angegebenen Testverfahren.

In bevorzugten Ausführungsformen sind mindestens zwei der oben genannten Parameter erfüllt, weiter bevorzugt wenigstens drei, weiter bevorzugt wenigstens vier, weiter bevorzugt wenigstens 5, noch weiter bevorzugt wenigstens 6 und ganz besonders bevorzugt sind alle 7 der oben genannten Parameter erfüllt. Dabei gehört auch jede mögliche Kombination von Parametern gleicher wie auch unterschiedlicher Bevorzugung zum Offenbarungsumfang dieser Schrift, z.B. "bevorzugt" mit "bevorzugt", aber auch "bevorzugt" mit "besonders bevorzugt" etc., auch wenn nicht jede dieser Kombinationen aus Gründen der Übersichtlichkeit ausdrücklich genannt ist.

Ganz besonders bevorzugt haben die erfindungsgemäßen Polyurethane eine Zugfestigkeit von mehr als 20 MPa, eine Reißdehnung von mehr als 500 %, eine Weiterreißwiderstand von größer oder gleich 25 kN/m, einen Abrieb von weniger als 55 mm$^3$, einen Druckverformungsrest von weniger als 24 % bei 23 °C und von weniger als 25 % bei 70 °C.

Die erfindungsgemäßen Polyurethane PU-E haben vorzugsweise eine Kennzahl KZ zwischen 1100 und 1600, bevorzugt zwischen 1100 und 1500, besonders bevorzugt zwischen 1150 und 1450, wobei die Kennzahl berechnet wird nach der Formel 2:

$$KZ = \frac{n_{ISO}}{n_{OH}} = \frac{f_{ISO1} n_{ISO1} + f_{ISO2} n_{ISO2}}{f_{P1} n_{P1} + f_{P2} n_{P2} + f_{KV} n_{KV}} \times 1000$$

FORMEL 2

worin bedeuten

$KZ$: Kennzahl
$n_{ISO}$: Gesamt Molanteil an NCO-haltigen Molekülen (Isocyanaten 1 und 2) in Mol
$n_{OH}$: Gesamt Molanteil an aktivem Wasserstoff, insbesondere an OH-haltigen Molekülen (Kettenverlängerer und Polyolen 1 und 2) in Mol
$f_{ISO1}$: Funktionalität von Isocyanat 1
$n_{ISO1}$: Molanteil von Isocyanat 1
$f_{ISO2}$: Funktionalität von Isocyanat 2
$n_{ISO2}$: Molanteil von Isocyanat 2
$f_{P1}$: Funktionalität von Polyol 1
$n_{P1}$: Molanteil von Polyol 1
$f_{P2}$: Funktionalität von Polyol 2
$n_{P2}$: Molanteil von Polyol 2
$f_{KV}$: Funktionalität von Kettenverlängerer
$n_{KV}$: Molanteil von Kettenverlängerer

Die erfindungsgemäßen Polyurethane eignen sich insbesondere zur Herstellung von Formkörpern, beispielsweise Rollen, Schuhsohlen, Verkleidungen in Automobilen, Schläuche, Beschichtungen, Kabel, Profile, Laminate, Steckverbindungen, Kabelstecker, Faltenbälge, Schleppkabel, Abstreifer, Dichtlippen, Kabelummantelungen, Dichtungen, Riemen oder Dämpfungselemente, Folien oder Fasern, hergestellt durch Spritzguss, Kalendrieren, Pulversintern oder Extrusion.

Beispiele

In den nachfolgenden Beispielen wurden folgende Komponenten verwendet:

Tabelle 1:

| Kurzbezeichnung | Zusammensetzung |
| --- | --- |
| PU-E | PU-1 + IC-1 |
| IC-1.1 | PU-2 + Prepolymer A |
| IC-1.2 | PU-2 + Prepolymer B |
| Prepolymer A | s. u. |
| Prepolymer B | s. u. |
| PU-1.1 | s. u. |
| PU-1.2 | s. u. |

(fortgesetzt)

| Kurzbezeichnung | Zusammensetzung |
|---|---|
| PU-2 | s. u. |

Prepolymer A ist ein Prepolymer auf Basis von Uretonimin enthaltendem MDI als Isocyanat-Komponente, Dipropylenglykol und Propylenglykol-Polyetherdiol mit einem zahlenmittleren Molekulargewicht von 0,45 kg/mol als Hydroxykomponente. Die Funktionalität des Prepolymers ist 2,05 und der NCO-Gehalt ist 23 g/100g (gemessen nach ASTM 5155-96A).

Prepolymer B ist ein Prepolymer auf Basis von polymerem MDI (PMDI) and monomeren MDI, basierend auf ca. 39 Gew.-% monomerem und 61 Gew.-% polymerem MDI) als Isocyanat-Komponente und Propylenglykol-Polyetherdiol mit einem zahlenmittleren Molekulargewicht von 0,45 kg/mol als Hydroxykomponente. Die Funktionalität von diesem Polymer ist 2,4 und der NCO-Gehalt ist 28,2 g/100g.

PU-1.1 ist ein Gemisch eines Polyester-Polyurethans auf Basis von 10,1 % MDI monomer, 0,7 % Butan-1,4-diol und 59,3 % eines Polyesterdiols (Butandiol-Ethylenglykol-Adipinsäure mit einem 1 zu 1 Mischungsverhältnis der Komponenten Butan/Ethylenglykol) mit einem Molekulargewicht von 2 kg/mol und mit einem weiteren hochmolekularen Polyurethan auf Basis von MDI Butan-1,4-diol und einem Polyesterdiol (Butandiol-Adipinsäure) mit einem Molekulargewicht von 2,5 kg/mol sowie 1 % von polymeren Carbodiimiden als Hydrolyseschutz, 1,5 % von Gleit- und Antiblockmittel, 0,2 % phenolischem Antioxidant, 0,1 % von Phosphor-basiertem Antioxidant sowie 0,1 % von fein pulverigem Talkum. Der Hartphasenanteil beträgt 3,5 % bezogen auf das Basispolyurethan (ohne den weiteren hochmolekularen Polyurethan auf Basis von MDI monomer, Butan-1,4-diol und einem Polyesterdiol (Butandiol-Adipinsäure) mit einem Molekulargewicht von 2,5 kg/mol Der Gewichtsanteil des weiteren hochmolekularen Polyurethans beträgt 27 % von PU-1.1

PU-1.2 ist ein Gemisch eines Polyester-Polyurethans auf Basis von 10,2 % MDI 0,7 % Butan-1,4-diol und 38 % Gewichtsteilen eines Polyesterdiol (Butandiol-Methylpropandiol-Adipinsäure; 1/1 Mischungsverhältnis der Komponenten Butan/Methylpropandiol) mit einem Molekulargewicht von 3 kg/mol, 38 % Gewichtsteilen eines Polyesterdiols (Butandiol-Hexandiol-Adipinsäure; 2/1 Mischungsverhältnis der Komponenten Butan/Hexandiol) mit einem Molekulargewicht von 2 kg/mol, 10,4 % Gewichtsteilen eines hochmolekularen Polyesters auf Basis von Terephthalatsäure und Butandiol, 1 % von polymeren aliphatischem Carbodiimid als Hydrolyseschutz, 0,8 % von Gleit- und Antiblockmittel, 0,4 % phenolishes Antioxidant sowie 0,5 % von fein pulveriges Talkum. Der Hartphasenanteil beträgt 2,8 % bezogen auf das Basispolyurethan.

PU-2 ist ein Polyester-Polyurethan auf Basis von MDI, Butan-1,4-diol und einem Polyesterdiol (Butandiol-Hexandiol-Adipinsäure) mit einem zahlenmittleren Molekulargewicht von 2 kg/mol. Der Hartphasenanteil beträgt 26 %.

Die Isocyanat-Komponenten IC-1.1 und IC-1.2 wurden durch Lösung der Isocyanat-Prepolymeren gemäß folgender Tabelle 2 in einem thermoplastischen Polyurethan hergestellt. Die Herstellung erfolgte gemäß der WO 2006/134138 A1:

Für die Herstellung der erfindungsgemäßen Polyurethane wurde ein Doppelwellenextruder Typ ZE 40 A der Fa. Berstorff verwendet mit einer Verfahrensteillänge von 35 D, unterteilt in 10 Gehäuse. Die Schneckenelementanordnung wies in Gehäuse 2 zwei rückwärts fördernde Knetblöcke als Aufschmelzeinheit für das Granulat thermoplastische Polyurethan PU-1 auf. Gehäuse 3, 6 und 7 wiesen zusätzlich zu üblichen Förderelementen Mischelemente in Form von Zahnscheibenblöcken auf.

Die Gehäusetemperaturen wurden zunächst alle auf 210°C eingestellt und das Isocyanatkonzentrat IC-1 wurde in Form von Granulat, basierend auf thermoplastischem Polyurethan PU-2, kontinuierlich per gravimetrischer Dosierung in Gehäuse 1 zugegeben. Danach wurden Prepolymer A oder B mittels Zahnradpumpe und gravimetrischer Dosierung in Gehäuse 3 kontinuierlich in die Schmelze des thermoplastischen Polyurethans PU-1 eingetragen und in den nachfolgenden Gehäusen intensiv eingemischt. Nach der Zugabe von Prepolymer A oder B wurden ab Gehäuse 4 alle weiteren Gehäusetemperaturen auf 150°C abgesenkt. Nachdem die am Extruderdüsenkopf austretenden, optisch klaren Schmelzstränge Temperaturen von 150-160°C erreicht hatten, wurden sie in einem Wasserbad abgekühlt, über eine Absaugvorrichtung von anhaftendem Wasser befreit und in üblicher Weise granuliert. Es resultierte ein hartes, gut kristallisierendes und nicht verklebendes Granulat, das ohne Nachtrocknung verwendet werden konnte (Konzentrat Nr. 1).

Tabelle 2:

| | Isocyanat IC-1.1 | Isocyanat IC-1.2 |
|---|---|---|
| Basis TPU | PU-2 | PU-2 |
| Isocyanat Prepolymer | Prepolymer A | Prepolymer B |

(fortgesetzt)

| | Isocyanat IC-1.1 | Isocyanat IC-1.2 |
|---|---|---|
| Resultierender NCO-Gehalt des Vernetzungsreagenzes (%) | 9 | 10 |

Mit diesen Komponenten wurden folgende Vergleiche durchgeführt:

Beispiel 1 (Vergleich): PU 1.1

PU-1.1-Granulat wurde im Spritzguss in üblicher Weise 1) zu Testplatten verarbeitet (Formkörper: Länge: 125 mm; Breite: 90 mm), die Testplatten wurden 20 Stunden bei 100°C getempert und deren mechanische Eigenschaften bestimmt.

Zugstäbe gemäß DIN-EN-ISO 527-2, Prüfkörper zur Bestimmung der Kerbschlagzähigkeit gemäß DIN-EN-ISO 179-1 und Testplatten wurden in einem Werkzeug durch Spritzgießen erzeugt. Dafür stand eine Schneckenkolben-Spritzgießmaschine, Typ Arburg 420 C zur Verfügung. Die Maschinen- und Prozessparameter stellen sich wie folgt dar:

- maximale Schließkraft = 100 kN
- Schneckengeometrie: D = 30 mm, L/D = 25 (Dreizonenschnecke)
- Gangtiefenverhältnis 2,2:1
- Werkzeugtemperatur 40 °C

Beispiel 2 (Erfindung): PU-E1

PU-1.1-Granulat wurde mit 8 % von Isocyanat IC-1.1-Granulat gemischt, diese Granulatmischung wurde im Spritzguss unter Reaktion zu Testplatten verarbeitet, die Testplatten wurden 20 Stunden bei 100°C getempert und deren mechanische Eigenschaften bestimmt. Die Ergebnisse sind der Tabelle 3 zu entnehmen.

Beispiel 3 (Erfindung): PU-E2

PU-1.1-Granulat wurde mit 8 % von Isocyanat IC-1.2-Granulat gemischt, diese Granulatmischung wurde im Spritzguss unter Reaktion zu Testplatten verarbeitet, die Test-platten wurden 20 Stunden bei 100°C getempert und deren mechanische Eigenschaften bestimmt. Die Ergebnisse sind der Tabelle 3 zu entnehmen.

Beispiel 4 (Vergleich): PU-1.2

PU-1.2-Granulat wurde im Spritzguss zu Testplatten verarbeitet, die Testplatten wurden 20 Stunden bei 100°C getempert und deren mechanische Eigenschaften bestimmt. Die Ergebnisse sind der Tabelle 3 zu entnehmen.

Beispiel 5 (Erfindung): PU-E3

PU-1.2-Granulat wurde mit 8 % von Isocyanat IC-1.2-Granulat gemischt, diese Granulatmischung wurde im Spritzguss zu Testplatten verarbeitet, die Testplatten wurden 20 Stunden bei 100°C getempert und deren mechanische Eigenschaften bestimmt.Die Ergebnisse sind der Tabelle 3 zu entnehmen.

Beispiel 6:

Prüfvorschrift zur Bestimmung des Biegewinkels:

Zur Bestimmung des Biegewinkels wurde ein Formkörper aus dem entsprechenden Polyurethan (Länge: 110 mm; Breite: 25 mm; Höhe: 2 mm) an den Enden um 180°geknickt und zwischen zwei Stahlplatten von 4 mm Dicke 16 Stunden lang bei 90°C in einem Ofen gelagert. Anschließend wurde der Formkörper aus dem Ofen entnommen und seine Abweichung von der Geraden nach 15 Minuten bei Raumtemperatur gemessen. Je kleiner der gemessene Biegewinkel ist, desto besser ist das entsprechende Material.

Beispiel 7 - Bestimmung de NCO Gehaltes

Das im Arbeitsbereich eingesetzte isocyanathaltige Material wird zunächst in Dichlormethan gelöst. Die Einwaage sollte dem zu erwartenden NCO-Gehalt angepasst sein. Es werden zwischen ca. 50 mg (bei einem NCO-Gehalt von ca. 30 % bis 40 %) und 500 mg (bei einem NCO-Gehalt von ca. 1 % bis 2 %) genau in einen 10-mL-Messkolben eingewogen, mit ca. 8 mL Dichlormethan versetzt und bis zum vollständigen Lösen geschüttelt. Anschließend füllt man mit Dichlormethan bis zur Eichmarke auf. In dem Titriergefäß des Titrationsapparates werden 50 mL Acetonitril vorgelegt und 1 mL der Materialprobenlösung zugegeben. Nach dem Einsetzen des Gefäßes in den Apparat werden 10 mL Dibutylaminlösung zudotiert. Anschließend lässt man 5 Minuten rühren und titriert mit 0,01 N Salzsäure das überschüssige Dibutylamin zurück. Es müssen immer Doppelbestimmungen durchgeführt werden. Gleichzeitig setzt man zwei Blindwertproben ohne die Materialprobenlösung an. Die Konzentration der Salzsäure wird mit Natriumcarbonat als Urtiter bestimmt.

Die Differenz des Salzsäureverbrauchs von Blindwert und Materialprobe entspricht dem mit NCO abreagierten Amin. Liegt diese Differenz nicht im Bereich zwischen 1 und 9 mL, muss die Bestimmung mit einem entsprechend niedrigeren bzw. höheren Volumen Materialprobenlösung wiederholt werden.

100 $\mu$L einer 0,01 N Salzsäure entsprechen 42 $\mu$g NCO. Das Ergebnis lässt sich auch in % NCO oder $\mu$g/g (x 10000) bzw. mg/g (x 10) darstellen.

Tabelle 3

| Eigenschaft | Einheit | Prüfvorschrift | Beispiele | | | | |
|---|---|---|---|---|---|---|---|
| | | | 1 Vergleich PU-1.1 | 2 Erfindung PU-E1 | 3 Erfindung PU-E2 | 4 Vergleich PU-1.2 | 5 Erfindung PU-E3 |
| | | | PU-1.1 | PU-1.1 + 8 % IC-1.1 | PU-1.1 +8% IC-1.2 | PU-1.2 | PU-1.2 +8% IC-1.2 |
| Zugfestigkeit | MPa | DIN 53 504 | 42 | 40 | 43 | 28 | 22 |
| Reißdehnung | % | DIN 53 504 | 920 | 570 | 570 | 1060 | 620 |
| Weiterreißwiderstand | kN/m | DIN ISO 34-1 | 47 | 44 | 34 | 38 | 25 |
| Abrieb | mm$^3$ | DIN ISO 4649 | 28 | 28 | 35 | 77 | 51 |
| Druckverformungsrest 72h/23°C/30min3min | % | DIN ISO 815 | 24 | 19 | 19 | - | - |
| Druckverformungsrest 24h/70°C/30min3min | % | DIN ISO 815 | 45 | 18 | 18 | 52 | 23 |
| Biegewinkel | ° | | 114 | 14 | 14 | 52 | 16 |

Die Ergebnisse der erfindungsgemäßen Beispiele zeigen eine signifikante Absenkung des Druckverformungsrestes und einen deutlich geringeren und somit besseren Biegewinkel.

**Patentansprüche**

1. Polyurethane PU-E auf Basis eines thermoplastischen Polyurethans PU-1 und eines dem thermoplastischen Polyurethan PU-1 zugegebenen Isocyanatkonzentrats IC-1 mit einer Funktionalität größer als 2 und kleiner als 10, **dadurch gekennzeichnet, dass** PU-1 einen Hartphasenanteil von 0 bis 5 % aufweist und das Isocyanatkonzentrat IC-1 zu mindestens 2 Gew.-% bezogen auf das Polyurethan PU-1 zugegeben wird.

2. Polyurethan PU-E nach Anspruch1, **dadurch gekennzeichnet, dass** das Isocyanatkonzentrat IC-1 20 Gew.-%, bis 70 Gew.-%, bevorzugt, 25 Gew.-%, bis 70 Gew.-% und besonders bevorzugt 35 Gew.-%, bis 60 Gew.-% Isocyanat enthält.

3. Polyurethan PU-E nach einem der vorherigen Ansprüche, **dadurch gekennzeichnet, dass** das Polyurethan PU-1 eine Kennzahl von 1100 bis 1600 aufweist.

4. Polyurethan PU-E nach wenigstens einem der vorhergehenden Ansprüche, **dadurch gekennzeichnet, dass** das thermoplastische Polyurethan PU-1 basiert auf

- einem Diphenylmethandiisocyanat (MDI), Naphthylendiisocyanat (NDI), Toluylendiisocyanat (TDI), Hexamethylendiisocyanat (HDI), Dicyclohexylmethandiisocyanat (H12MDI) und/oder IPDI, insbesondere MDI,
- einer Polyolkomponente mit einem zahlenmittleren Molekulargewicht größer als 0,5 kg/mol und weniger als 12 kg/mol, bevorzugt 0,6 kg/mol bis 6 kg/mol und besonders bevorzugt 0,8 kg/mol bis 4 kg/mol und einer mittleren Funktionalität von 1,8 bis 2,3 , bevorzugt von 1,9 bis 2,2 und besonders bevorzugt 2 als Weichphasen-Komponente und
- einer Polyolkomponente mit einem zahlenmittleren Molekulargewicht von mehr als 0 kg/mol und maximal 0,499 kg/mol als Hartphasen-Komponente.

5. Polyurethan PU-E nach wenigstens einem der vorhergehenden Ansprüche, **dadurch gekennzeichnet, dass** das Polyurethan PU-1 basiert auf MDI als Isocyanat, einem Polyesterol oder Polyetherol, insbesondere einem Polyester der Adipinsäure als Weichphasenkomponente und Butan-1,4-diol als Hartphasenkomponente.

6. Polyurethan PU-E nach wenigstens einem der vorhergehenden Ansprüche, **dadurch gekennzeichnet, dass** wenigstens eine der folgenden Größen erfüllt ist.

   - Zugfestigkeit größer als 5 MPa,
   - Reißdehnung größer als200 %,
   - Weiterreißwiderstand größer oder gleich als 10 kN/m,
   - Abrieb kleiner als 100 mm$^3$,
   - Druckverformungsrest kleiner als 40 % bei 23°C
   - Druckverformungsrest kleiner als 50 % bei 70°C,
   - Biegewinkel kleiner als 50 % bei 23°C.

7. Polyurethan PU-E nach wenigstens einem der vorhergehenden Ansprüche, **dadurch gekennzeichnet, dass** das Isocyanatkonzentrat IC-1 ein IsocyanatPrepolymer gelöst in einem Polyurethan PU-2 ist.

8. Polyurethan PU-E nach Anspruch 7, **dadurch gekennzeichnet, dass** die Polyurethane PU-2 und PU-1 identisch sind.

9. Polyurethan PU-E nach Anspruch 7, **dadurch gekennzeichnet, dass** das Isocyanatkonzentrat IC-1 ein Prepolymer auf Basis eines Diphenylmethandiisocyanates (MDI) ist, welches modifiziert und/oder als Polymer vorliegt.

10. Polyurethan PU-E nach wenigstens einem der vorhergehenden Ansprüche, **dadurch gekennzeichnet, dass** das Polyurethan PU-1 einen Hartphasenanteil von 1 % bis 4 % aufweist.

11. Verfahren zur Herstellung eines Polyurethans PU-E nach wenigstens einem der vorhergehenden Ansprüche, **dadurch gekennzeichnet, dass** man das Polyurethan PU-1 und das Isocyanatkonzentrat IC-1 mischt, aufschmilzt und in einem Extruder oder in einem Spritzgussverfahren verarbeitet.

12. Verfahren nach Anspruch 11, **dadurch gekennzeichnet, dass** das Isocyanatkonzentrat IC-1 als Granulat zugegeben wird.

13. Verwendung des Polyurethans PU-E nach wenigstens einem der vorhergehenden Ansprüche zur Herstellung von Formkörpern, beispielsweise Rollen, Schuhsohlen, Verkleidungen in Automobilen, Schläuche, Beschichtungen, Kabel, Profile, Laminate, Steckverbindungen, Kabelstecker, Faltenbälge, Schleppkabel, Abstreifer, Dichtlippen, Kabelummantelungen, Dichtungen, Riemen oder Dämpfungselemente, Folien oder Fasern, durch Spritzguss, Kalendrieren, Pulversintern oder Extrusion.

14. Polymerblend oder Mischung enthaltend ein Polyurethan PU-E nach wenigstens einem der vorhergehenden Ansprüche und zusätzlich wenigstens ein anderes Polymer, vorzugsweise ein thermoplastisches Polyurethan, einen Polyester, Polyether oder ein Polyamid, insbesondere in einer Menge von insgesamt 5 bis 40 %, bezogen auf das Gesamtgewicht berechnet aus Polyurethan PU-E und anderes Polymer.

15. Folien, Spritzgussartikel oder Extrusionsartikel enthaltend ein Polyurethan PU-E nach wenigstens einem der vorhergehenden Ansprüche.

**Claims**

1. A polyurethane PU-E based on a thermoplastic polyurethane PU-1 and an isocyanate concentrate IC-1 having a functionality greater than 2 and less than 10 added to the thermoplastic polyurethane PU-1, wherein PU-1 has a hard phase content of from 0 to 5% and the isocyanate concentrate IC-1 is added in an amount of at least 2% by weight based on the polyurethane PU-1.

2. The polyurethane PU-E according to claim 1, wherein the isocyanate concentrate IC-1 comprises from 20% by weight to 70% by weight, preferably from 25% by weight to 70% by weight and particularly preferably from 35% by weight to 60% by weight, of isocyanate.

3. The polyurethane PU-E according to either of the preceding claims, wherein the polyurethane PU-1 has an index of from 1100 to 1600.

4. The polyurethane PU-E according to at least one of the preceding claims, wherein the thermoplastic polyurethane PU-1 is based on

   - a diphenylmethane diisocyanate (MDI), naphthylene diisocyanate (NDI), tolylene diisocyanate (TDI), hexamethylene diisocyanate (HDI), dicyclohexylmethane diisocyanate (H12MDI) and/or IPDI, in particular MDI,
   - a polyol component having a number average molecular weight greater than 0.5 kg/mol and less than 12 kg/mol, preferably from 0.6 kg/mol to 6 kg/mol and particularly preferably from 0.8 kg/mol to 4 kg/mol, and an average functionality of from 1.8 to 2.3, preferably from 1.9 to 2.2 and particularly preferably 2, as soft phase components and
   - a polyol component having a number average molecular weight of more than 0 kg/mol and not more than 0.499 kg/mol as hard phase component.

5. The polyurethane PU-E according to at least one of the preceding claims, wherein the polyurethane PU-1 is based on MDI as isocyanate, a polyesterol or polyetherol, in particular a polyester of adipic acid, as soft phase component and 1,4-butanediol as hard phase component.

6. The polyurethane PU-E according to at least one of the preceding claims, wherein at least one of the following parameters is fulfilled:

   - tensile strength greater than 5 MPa,
   - elongation at break greater than 200%,
   - tear propagation resistance greater than or equal to 10 kN/m,
   - abrasion less than 100 mm$^3$,
   - compression set less than 40% at 23°C,
   - compression set less than 50% at 70°C,
   - bending angle less than 50% at 23°C.

7. The polyurethane PU-E according to at least one of the preceding claims, wherein the isocyanate concentrate IC-1 is an isocyanate prepolymer dissolved in a polyurethane PU-2.

8. The polyurethane PU-E according to claim 7, wherein the polyurethanes PU-2 and PU-1 are identical.

9. The polyurethane PU-E according to claim 7, wherein the isocyanate concentrate IC-1 is a prepolymer based on a diphenylmethane diisocyanate (MDI) which is present in modified form and/or as polymer.

10. The polyurethane PU-E according to at least one of the preceding claims, wherein the polyurethane PU-1 has a hard phase content of from 1% to 4%.

11. A process for producing a polyurethane PU-E according to at least one of the preceding claims, wherein the polyurethane PU-1 and the isocyanate concentrate IC-1 are mixed, melted and processed in an extruder or in an injection molding process.

12. The process according to claim 11, wherein the isocyanate concentrate IC-1 is added as pellets.

**13.** The use of the polyurethane PU-E according to at least one of the preceding claims for producing moldings, for example rollers, shoe soles, linings in automobiles, hoses, coatings, cables, profiles, laminates, plug connections, cable plugs, bellows, towing cables, scrapers, sealing lips, cable sheathing, seals, belts or damping elements, films or fibers, by injection molding, calendering, powder sintering or extrusion.

**14.** A polymer blend or mixture comprising a polyurethane PU-E according to at least one of the preceding claims and in addition at least one other polymer, preferably a thermoplastic polyurethane, a polyester, polyether or a polyamide, in particular in a total amount of from 5 to 40%, based on the total weight calculated from polyurethane PU-E and other polymer.

**15.** A film, injection-molded article or extruded article comprising a polyurethane PU-E according to at least one of the preceding claims.

**Revendications**

**1.** Polyuréthanes PU-E à base d'un polyuréthane thermoplastique PU-1 et d'un concentré d'isocyanate IC-1 ajouté au polyuréthane thermoplastique PU-1 d'une fonctionnalité supérieure à 2 et inférieure à 10, **caractérisés en ce que** PU-1 présente une proportion de phase dure de 0 à 5 % et le concentré d'isocyanate IC-1 est ajouté à hauteur d'au moins 2 % en poids par rapport au polyuréthane PU-1.

**2.** Polyuréthane PU-E selon la revendication 1, **caractérisé en ce que** le concentré d'isocyanate IC-1 contient 20 % en poids à 70 % en poids, de préférence 25 % en poids à 70 % en poids et de manière particulièrement préférée 35 % en poids à 60 % en poids, d'isocyanate.

**3.** Polyuréthane PU-E selon l'une quelconque des revendications précédentes, **caractérisé en ce que** le polyuréthane PU-1 présente un indice de 1 100 à 1 600.

**4.** Polyuréthane PU-E selon au moins l'une quelconque des revendications précédentes, **caractérisé en ce que** le polyuréthane thermoplastique PU-1 est à base :

- d'un diisocyanate de diphénylméthane (MDI), d'un diisocyanate de naphtylène (NDI), d'un diisocyanate de toluylène (TDI), d'un diisocyanate d'hexaméthylène (HDI), d'un diisocyanate de dicyclohexylméthane (H12MDI) et/ou d'un IPDI, notamment de MDI,
- d'un composant polyol ayant un poids moléculaire moyen en nombre supérieur à 0,5 kg/mol et inférieur à 12 kg/mol, de préférence de 0,6 kg/mol à 6 kg/mol et de manière particulièrement préférée de 0,8 kg/mol à 4 kg/mol, et une fonctionnalité moyenne de 1,8 à 2,3, de préférence de 1,9 à 2,2 et de manière particulièrement préférée de 2, en tant que composant de phase souple, et
- d'un composant polyol ayant un poids moléculaire moyen en nombre supérieur à 0 kg/mol et d'au plus 0,499 kg/mol en tant que composant de phase dure.

**5.** Polyuréthane PU-E selon au moins l'une quelconque des revendications précédentes, **caractérisé en ce que** le polyuréthane PU-1 est à base de MDI en tant qu'isocyanate, d'un polyestérol ou d'un polyéthérol, notamment d'un polyester de l'acide adipique, en tant que composant de phase souple et de butane-1,4-diol en tant que composant de phase dure.

**6.** Polyuréthane PU-E selon au moins l'une quelconque des revendications précédentes, **caractérisé en ce qu'**au moins une des grandeurs suivantes est satisfaite :

- résistance à la traction supérieure à 5 MPa,
- allongement à la rupture supérieur à 200 %,
- résistance à la propagation d'un déchirement supérieure ou égale à 10 kN/m,
- abrasion inférieure à 100 mm$^3$,
- déformation rémanente après compression inférieure à 40 % à 23 °C,
- déformation rémanente après compression inférieure à 50 % à 70 °C,
- angle de flexion inférieur à 50 % à 23 °C.

**7.** Polyuréthane PU-E selon au moins l'une quelconque des revendications précédentes, **caractérisé en ce que** le concentré d'isocyanate IC-1 est un prépolymère d'isocyanate dissous dans un polyuréthane PU-2.

8. Polyuréthane PU-E selon la revendication 7, **caractérisé en ce que** les polyuréthanes PU-2 et PU-1 sont identiques.

9. Polyuréthane PU-E selon la revendication 7, **caractérisé en ce que** le concentré d'isocyanate IC-1 est un prépolymère à base d'un diisocyanate de diphénylméthane (MDI), qui se présente sous forme modifiée et/ou sous la forme d'un polymère.

10. Polyuréthane PU-E selon au moins l'une quelconque des revendications précédentes, **caractérisé en ce que** le polyuréthane PU-1 présente une proportion de phase dure de 1 % à 4 %.

11. Procédé de fabrication d'un polyuréthane PU-E selon au moins l'une quelconque des revendications précédentes, **caractérisé en ce que** le polyuréthane PU-1 et le concentré d'isocyanate IC-1 sont mélangés, fondus et usinés dans une extrudeuse ou par un procédé de moulage par injection.

12. Procédé selon la revendication 11, **caractérisé en ce que** le concentré d'isocyanate IC-1 est ajouté sous la forme d'un granulat.

13. Utilisation du polyuréthane PU-E selon au moins l'une quelconque des revendications précédentes pour la fabrication de corps moulés, par exemple de rouleaux, de semelles de chaussures, d'habillages automobiles, de tuyaux, de revêtements, de câbles, de profilés, de stratifiés, de connecteurs, de fiches pour câbles, de soufflets, de câbles de traction, de déflecteurs, de lèvres d'étanchéité, d'enrobages de câbles, de joints, de courroies ou d'éléments d'amortissement, de feuilles ou de fibres, par moulage par injection, calandrage, frittage de poudres ou extrusion.

14. Alliage polymère ou mélange contenant un polyuréthane PU-E selon au moins l'une quelconque des revendications précédentes et également au moins un autre polymère, de préférence un polyuréthane thermoplastique, un polyester, un polyéther ou un polyamide, notamment en une quantité totale de 5 à 40 %, par rapport au poids total calculé à partir du polyuréthane PU-E et de l'autre polymère.

15. Feuilles, articles moulés par injection ou articles extrudés contenant un polyuréthane PU-E selon au moins l'une quelconque des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005054322 A2
- WO 2006134138 A1
- WO 03014179 A1
- WO 0112692 A1

**In der Beschreibung aufgeführte Nicht-Patentliteratur**

- Plastics Additive Handbook. Hanser Publishers, 2001, S. 98-S. 136
- Plastics Additive Handbook. Hanser Publishers, 2001, 98-107116-121
- Plastics Additive Handbook. Hanser Publishers, 2001, 116-122
- Plastics Additive Handbook. Hanser Publishers, 2001, 123-136
- Plastics Additive Handbook. Hanser Publishers, 2001